(19) **Europäisches Patentamt**

**European Patent Office**

**Office européen des brevets**

(11) **EP 1 640 594 A1**

(12) **EUROPÄISCHE PATENTANMELDUNG**

(43) Veröffentlichungstag:
    **29.03.2006 Patentblatt 2006/13**

(51) Int Cl.:
    **F02M 25/07** *(2006.01)*

(21) Anmeldenummer: 04104581.6

(22) Anmeldetag: **22.09.2004**

(84) Benannte Vertragsstaaten:
    **AT BE BG CH CY CZ DE DK EE ES FI FR GB GR HU IE IT LI LU MC NL PL PT RO SE SI SK TR**
    Benannte Erstreckungsstaaten:
    **AL HR LT LV MK**

(71) Anmelder: **Ford Global Technologies, LLC, A subsidary of Ford Motor Company Dearborn, MI 48126 (US)**

(72) Erfinder:
    • **Schorn, Norbert**
      **52080 Aachen (DE)**
    • **Kindl, Matthias**
      **52066 Aachen (DE)**

    • **Spaeder, Uwe**
      **52066 Aachen (DE)**
    • **Stalman, Rob**
      **52538 Selfkant (DE)**

(74) Vertreter: **Dörfler, Thomas**
    **Ford-Werke Aktiengesellschaft**
    **Abt. NH-364**
    **Henry-Ford-Strasse 1**
    **50735 Köln (DE)**

Bemerkungen:
    Geänderte Patentansprüche gemäss Regel 86 (2) EPÜ.

(54) **Aufgeladene Brennkraftmaschine und Verfahren zur Beeinflussung der Menge an zurückgeführtem Abgas einer aufgeladenen Brennkraftmaschine**

(57) Die Erfindung betrifft eine aufgeladene Brennkraftmaschine (1) mit mindestens zwei Zylindern (3), die in der Art Konfiguriert sind, daß sie zwei Gruppen (3',3") mit jeweils mindestens einem Zylinder (3) bilden und beide Zylindergruppen (3',3") jeweils mit einer separaten Abgasleitung (4',4") ausgestattet sind, und mit zwei parallel geschalteten Abgasturboladern (6,7) wobei eine erste Turbine (6a) eines ersten Abgasturboladers (6) in der Abgasleitung (4') der ersten Zylindergruppe (3') angeordnet ist und eine zweite Turbine (7a) eines zweiten Abgasturboladers (7) in der Abgasleitung (4") der zweiten Zylindergruppe (3") angeordnet ist und die diesen Turbinen (6a,7a) zugeordneten Verdichter (6b,7b) in separaten Ansaugleitungen (2',2") angeordnet sind, die stromabwärts der Verdichter (6b,7b) zu einer Gesamtansaugleitung (2) zusammenlaufen und zur Versorgung der Brennkraftmaschine (1) mit Frischluft bzw. Frischgemisch dienen.

Des weiteren betrifft die Erfindung ein Verfahren zur Beeinflussung der Menge an zurückgeführtem Abgas einer aufgeladenen Brennkraftmaschine (1) der oben genannten Art.

Fig.5

**Beschreibung**

Die Erfindung betrifft eine aufgeladene Brennkraftmaschine mit mindestens zwei Zylindern, die in der Art konfiguriert sind, daß sie zwei Gruppen mit jeweils mindestens einem Zylinder bilden und beide Zylindergruppen jeweils mit einer separaten Abgasleitung ausgestattet sind, und mit zwei parallel geschalteten Abgasturboladern, wobei eine erste Turbine eines ersten Abgasturboladers in der Abgasleitung der ersten Zylindergruppe angeordnet ist und eine zweite Turbine eines zweiten Abgasturboladers in der Abgasleitung der zweiten Zylindergruppe angeordnet ist und die diesen Turbinen zugeordneten Verdichter in separaten Ansaugleitungen angeordnet sind, die stromabwärts der Verdichter zu einer Gesamtansaugleitung zusammenlaufen und zur Versorgung der Brennkraftmaschine mit Frischluft bzw. Frischgemisch dienen.

Des weiteren betrifft die Erfindung ein Verfahren zur Beeinflussung der Menge an zurückgeführtem Abgas einer aufgeladenen Brennkraftmaschine der oben genannten Art.

Im Rahmen der vorliegenden Erfindung umfaßt der Begriff Brennkraftmaschine sowohl Dieselmotoren als auch Ottomotoren.

In den letzten Jahren hat sich eine Entwicklung hin zu kleinen, hochaufgeladenen Motoren vollzogen, wobei die Aufladung in erster Linie ein Verfahren zur Leistungssteigerung ist, bei dem die für den motorischen Verbrennungsprozeß benötigte Luft verdichtet wird. Die wirtschaftliche Bedeutung dieser Motoren für die Automobilbauindustrie nimmt weiter ständig zu.

In der Regel wird für die Aufladung ein Abgasturbolader eingesetzt, bei dem ein Verdichter und eine Turbine auf derselben Welle angeordnet sind, wobei der heiße Abgasstrom der Turbine zugeführt wird und sich unter Energieabgabe in dieser Turbine entspannt, wodurch die Welle in Drehung versetzt wird. Die vom Abgasstrom an die Turbine und schließlich an die Welle abgegebene Energie wird für den Antrieb des ebenfalls auf der Welle angeordneten Verdichters genutzt. Der Verdichter fördert und komprimiert die ihm zugeführte Ladeluft, wodurch eine Aufladung der Zylinder erreicht wird.

Die Vorteile des Abgasturboladers beispielsweise im Vergleich zu mechanischen Ladern besteht darin, daß keine mechanische Verbindung zur Leistungsübertragung zwischen Lader und Brennkraftmaschine besteht bzw. erforderlich ist. Während ein mechanischer Lader die für seinen Antrieb benötigte Energie vollständig von der Brennkraftmaschine bezieht und somit die bereitgestellte Leistung mindert und auf diese Weise den Wirkungsgrad nachteilig beeinflußt, nutzt der Abgasturbolader die Abgasenergie der heißen Abgase.

Ein typischer Vertreter der kleinen, hochaufgeladenen Motoren ist eine Brennkraftmaschine mit Abgasturboaufladung, bei der die Abgasenergie zur Verdichtung der Verbrennungsluft eingesetzt wird, und die zusätzlich über eine Ladeluftkühlung verfügt, mit der die komprimierte Verbrennungsluft vor Eintritt in den Brennraum runtergekühlt wird.

Wie oben bereits ausgeführt, hat in den letzten Jahren der Einsatz von Abgasturboladern stark zugenommen, wobei ein Ende dieser Entwicklung nicht abzusehen ist. Die Gründe hierfür sind vielschichtig und werden im folgenden kurz dargelegt.

Die Aufladung dient in erster Linie der Leistungssteigerung der Brennkraftmaschine. Die für den Verbrennungsprozeß benötigte Luft wird dabei verdichtet, wodurch jedem Zylinder pro Arbeitsspiel eine größere Luftmasse zugeführt werden kann. Dadurch können die Kraftstoffmasse und damit der Mitteldruck $p_{me}$ gesteigert werden.

Die Aufladung ist ein geeignetes Mittel, bei unverändertem Hubraum die Leistung einer Brennkraftmaschine zu steigern, oder bei gleicher Leistung den Hubraum zu reduzieren. In jedem Fall führt die Aufladung zu einer Erhöhung der Bauraumleistung und einer günstigeren Leistungsmasse. Bei gleichen Fahrzeugrandbedingungen läßt sich so das Lastkollektiv zu höheren Lasten hin verschieben, wo der spezifische Kraftstoffverbrauch niedriger ist. Letzteres wird auch als Downsizing bezeichnet.

Die Aufladung unterstützt folglich das ständige Bemühen in der Entwicklung von Verbrennungsmotoren, aufgrund der begrenzten Ressourcen an fossilen Energieträgern, insbesondere aufgrund der begrenzten Vorkommen an Mineralöl als Rohstoff für die Gewinnung von Brennstoffen für den Betrieb von Verbrennungskraftmaschinen, den Kraftstoffverbrauch zu minimieren, d. h. den Wirkungsgrad der Brennkraftmaschine zu verbessern.

Ein weiteres grundsätzliches Ziel ist es, die Schadstoffemissionen zu reduzieren. Bei der Lösung dieser Aufgabe kann die Aufladung der Brennkraftmaschine ebenfalls zielführend sein. Bei gezielter Auslegung der Aufladung können nämlich Vorteile im Wirkungsgrad und bei den Abgasemissionen erzielt werden. So können mittels geeigneter Aufladung beispielsweise beim Dieselmotor die Stickoxidemissionen ohne Einbußen beim Wirkungsgrad verringert werden. Gleichzeitig können die Kohlenwasserstoffemissionen günstig beeinflußt werden. Die Emissionen an Kohlendioxid, die direkt mit dem Kraftstoffverbrauch korrelieren, nehmen mit sinkendem Kraftstoffverbrauch ebenfalls ab. Die Aufladung eignet sich daher ebenfalls zur Reduzierung der Schadstoffemissionen. Um die zukünftigen Grenzwerte für Schadstoffemissionen einzuhalten, sind aber darüber hinaus weitere Maßnahmen erforderlich, auf die weiter unten noch im Detail eingegangen werden wird, da insbesondere sie Gegenstand der vorliegenden Erfindung sind. Zunächst sollen aber die grundsätzlichen Probleme bei der Auslegung des Abgasturboladers aufgezeigt werden, die bei sämtlichen anderen Maßnahmen mit in Betracht zu ziehen sind.

Schwierigkeiten bereitet die Auslegung des Abgasturboladers, wobei grundsätzlich eine spürbare Leistungssteigerung in allen Drehzahlbereichen angestrebt wird. Nach dem Stand der Technik wird aber ein starker Drehmomentabfall bei Unterschreiten einer bestimmten Drehzahl beobachtet. Dieser Effekt ist unerwünscht, da der Fahrer im Vergleich mit einem nicht aufgeladenen Motor gleicher Maximalleistung auch im unteren Drehzahlbereich ein entsprechend großes Drehmoment erwartet. Das sogenannte Turboloch bei niedrigen Drehzahlen zählt daher auch zu den gravierendsten Nachteilen der Abgasturboaufladung.

Verständlich wird dieser Drehmomentabfall, wenn berücksichtigt wird, daß das Ladedruckverhältnis vom Turbinendruckverhältnis abhängt. Wird beispielsweise bei einem Dieselmotor die Motorendrehzahl verringert, führt dies zu einem kleineren Abgasmassenstrom und damit zu einem kleineren Turbinendruckverhältnis. Dies hat zur Folge, daß zu niedrigeren Drehzahlen hin das Ladedruckverhältnis ebenfalls abnimmt, was gleichbedeutend ist mit einem Drehmomentabfall.

Grundsätzlich kann dabei dem Abfall des Ladedruckes durch eine Verkleinerung des Turbinenquerschnittes und der damit einhergehenden Steigerung des Turbinendruckverhältnisses entgegengewirkt werden, was aber zu Nachteilen bei hohen Drehzahlen führt.

In der Praxis führen die beschriebenen Zusammenhänge häufig dazu, daß ein möglichst kleiner Abgasturbolader d.h. ein Abgasturbolader mit einem möglichst kleinen Turbinenquerschnitt eingesetzt wird. Letztendlich wird damit dem Drehmomentabfall nur in geringem Maße entgegengewirkt und der Drehmomentabfall weiter zu geringeren Drehzahlen hin verschoben. Zudem sind dieser Vorgehensweise d.h. der Verkleinerung des Turbinenquerschnittes Grenzen gesetzt, da die gewünschte Aufladung und Leistungssteigerung auch bei hohen Drehzahlen uneingeschränkt und in dem gewünschten Maße möglich sein soll.

Die Drehmomentcharakteristik einer aufgeladenen Brennkraftmaschine wird nach dem Stand der Technik durch unterschiedliche Maßnahmen zu verbessern versucht.

Beispielsweise durch eine kleine Auslegung des Turbinenquerschnittes und gleichzeitiger Abgasabblasung, wobei die Abgasabblasung mittels Ladedruck oder mittels Abgasdruck gesteuert werden kann. Eine derartige Turbine wird auch als Waste-Gate-Turbine bezeichnet. Überschreitet der Abgasmassenstrom eine kritische Größe wird ein Teil des Abgasstromes im Rahmen der sogenannten Abgasabblasung mittels einer Bypaßleitung an der Turbine vorbei geführt. Diese Vorgehensweise hat aber - wie bereits oben angesprochen - den Nachteil, daß das Aufladeverhalten bei höheren Drehzahlen unzureichend ist.

Grundsätzlich ist auch eine kleine Auslegung des Turbinenquerschnittes zusammen mit einer Ladeluftabblasung möglich, wobei diese Variante aufgrund der energetischen Nachteile der Ladeluftabblasung d.h. der Verschlechterung des effektiven Wirkungsgrades selten zum Einsatz kommt, und die vorhandenen Verdichter an ihre Fördergrenze geraten können und somit die gewünschte Leistung nicht mehr dargestellt werden kann.

Bei Dieselmotoren kann eine kleine Auslegung des Turbinenquerschnittes und die gleichzeitige Begrenzung des Ladedruckes durch Abregelung der Brennstoffmasse bei hohen Drehzahlen zielführend sein. Die Möglichkeiten zur Leistungssteigerung mittels Abgasturboaufladung werden dabei aber nicht voll ausgeschöpft.

Der Abgasturbolader kann aber auch auf hohe Drehzahlen abgestimmt mit einem großen Turbinenquerschnitt ausgelegt werden. Dabei wird das Saugsystem dann in der Weise gestaltet, daß durch Wellenvorgänge bei niedrigen Drehzahlen eine dynamische Aufladung erfolgt. Nachteilig ist dabei der hohe Bauaufwand und das träge Verhalten bei Drehzahländerungen.

Eine Turbine mit variabler Turbinengeometrie gestattet eine Anpassung der Turbinengeometrie bzw. des wirksamen Turbinenquerschnittes an den jeweiligen Betriebspunkt der Brennkraftmaschine, so daß eine Regelung der Turbinengeometrie im Hinblick auf niedrige und hohe Drehzahlen als auch für niedrige und hohe Lasten erfolgen kann.

Die Drehmomentcharakteristik einer aufgeladenen Brennkraftmaschine kann des weiteren durch eine Registeraufladung verbessert werden. Dabei werden mehrere parallel geschaltete Turbolader mit entsprechend kleinen Turbinenquerschnitten mit steigender Last zugeschaltet.

Mehrere parallel geschaltete Turbolader sind hinsichtlich der Verbesserung der Drehmomentcharakteristik auch dann zielführend, wenn sie - wie bei einer Brennkraftmaschine der gattungsbildenden Art - in der Weise konfiguriert werden, daß die Zylinder der Brennkraftmaschine in zwei Zylindergruppen, die jeweils über eine separate Abgasleitung verfügen, aufgeteilt werden und jeder der beiden Abgasleitungen bzw. jeder Zylindergruppe ein Abgasturbolader zugeordnet wird. Die Turbine des ersten Abgasturboladers ist dabei in der Abgasleitung der ersten Zylindergruppe angeordnet, während die Turbine des zweiten Abgasturboladers in der Abgasleitung der zweiten Zylindergruppe abgeordnet wird. Beide Turbinen werden daher nicht mittels eines gemeinsamen Gesamtabgasstromes angetrieben, sondern jede der beiden Turbinen - isoliert von der anderen Turbine - mittels eines separaten Abgasteilstromes der entsprechenden Zylindergruppe.

Die Verdichter der Abgasturbolader sind korrespondierend zur Anordnung der beiden Turbinen in zwei separaten Ansaugleitungen angeordnet, wobei diese Ansaugleitungen zu einer Gesamtansaugleitung zusammengeführt werden.

Die in dieser Weise parallel angeordneten Abgasturbolader bzw. Turbinen gestatten es, die Abgasturbolader kleiner zu dimensionieren und die Turbinen auf kleinere Abgasströme auszulegen.

Zwei parallel geschaltete Abgasturbolader bieten neben dem geringeren Bauraumbedarf noch weitere Vorteile. Das Ansprechverhalten einer derartig aufgeladenen Brennkraftmaschine ist gegenüber einer vergleichbaren Brennkraftmaschine mit nur einem Abgasturbolader verbessert. Der Grund hierfür ist darin zu finden, daß die beiden kleineren Abgasturbolader weniger träge sind als ein großer Abgasturbolader bzw. das Laufzeug sich schneller beschleunigen und verzögern läßt, und in den meisten Fällen die Abgasleitungen kompakter sind und somit die Stosseffekte besser ausgenutzt werden.

Wie bereits oben erwähnt sind neben der Aufladung weitere Maßnahmen erforderlich, um zukünftige Grenzwerte für Schadstoffemissionen einzuhalten. Im Mittelpunkt der Entwicklungsarbeiten steht dabei unter anderem die Reduzierung der Stickoxidemissionen, die insbesondere bei den Dieselmotoren von hoher Relevanz sind. Da die Bildung der Stickoxide nicht nur einen Luftüberschuß, sondern auch hohe Temperaturen erfordert, besteht ein Konzept zur Senkung der Stickoxidemissionen darin, Verbrennungsprozesse bzw. -verfahren mit niedrigeren Verbrennungstemperaturen zu entwickeln.

Dabei ist die Abgasrückführung d.h. die Rückführung von Verbrennungsgasen aus der Abgasleitung in die Ansaugleitung zielführend, bei der mit zunehmender Abgasrückführrate die Stickoxidemissionen deutlich gesenkt werden können. Die Abgasrückführrate $x_{AGR}$ bestimmt sich dabei wie folgt:

$$x_{AGR} = m_{AGR} / (m_{AGR} + m_{Frischluft})$$

wobei $m_{AGR}$ die Masse an zurückgeführtem Abgas und $m_{Frischluft}$ die zugeführte - gegebenenfalls durch einen Verdichter geführte und komprimierte - Frischluft bzw. Verbrennungsluft bezeichnet.

Die Abgasrückführung eignet sich auch zur Reduzierung der Emissionen an unverbrannten Kohlenwasserstoffen im Teillastbereich.

Um eine deutliche Senkung der Stickoxidemissionen zu erreichen, sind hohe Abgasrückführraten erforderlich, die in der Größenordnung von $x_{AGR} \approx 60\%$ bis 70% liegen können.

Dadurch ergibt sich aber ein Konflikt beim Betrieb einer Brennkraftmaschine mit Abgasturboaufladung und gleichzeitiger Verwendung einer Abgasrückführung, da das rückgeführte Abgas stromaufwärts der Turbine aus der Abgasleitung entnommen wird. Anhand einer einstufig aufgeladenen Brennkraftmaschine mit einem Abgasturbolader läßt sich dieser Konflikt leicht verdeutlichen.

Bei einer Steigerung der Abgasrückführrate nimmt gleichzeitig der verbleibende der Turbine zugeführte Abgasstrom ab. Der kleinere Abgasmassenstrom durch die Turbine führt zu einem kleineren Turbinendruckverhältnis. Mit abnehmendem Turbinendruckverhältnis nimmt das Ladedruckverhältnis ebenfalls ab, was gleichbedeutend ist mit einem kleineren Verdichtermassenstrom. Neben dem abnehmenden Ladedruck können sich zusätzliche Probleme beim Betrieb des Verdichters hinsichtlich der Pumpgrenze des Verdichters einstellen.

Die beschriebenen Effekte d. h. die Zunahme der Abgasrückführung und die dadurch hervorgerufene gleichzeitige Abnahme des Ladedrucks bzw. Verdichterstroms führen zu einer fetteren Zylinderfrischladung d.h. zu weniger Frischluft bzw. Sauerstoff im Brennraum. Dies führt zu einer erhöhten Rußbildung, insbesondere bei der Beschleunigung, denn aufgrund der Trägheit des Laufzeugs des Abgasturboladers wird die Brennstoffmenge häufig schneller erhöht als die den Zylindern zugeführte Frischluft.

Aus diesem Grunde sind Aufladekonzepte erforderlich, die - insbesondere im Teillastbereich - ausreichend hohe Ladedrücke bei gleichzeitig hohen Abgasrückführraten sicherstellen. Erschwert wird der aufgezeigte Konflikt zwischen Abgasrückführung und Aufladung dadurch, daß die Rückführung von Abgas aus der Abgasleitung in die Ansaugleitung eine Druckdifferenz d.h. ein Druckgefälle von der Abgasseite hin zur Ansaugseite erfordert. Zur Erzielung der geforderten hohen Abgasrückführraten ist darüber hinaus ein hohes Druckgefälle erforderlich. Diese Zielsetzung erfordert einen niedrigen Ladedruck bzw. einen Ladedruck, der niedriger ist als der Abgasgegendruck in der zur Abgasrückführung genutzten Abgasleitung, was der oben aufgestellten Forderung nach einem hohen Ladedruck widerspricht.

Die aufgezeigten Konflikte bei der gleichzeitigen Verwendung von Abgasturboladern und Abgasrückführsystemen können nach dem Stand der Technik nicht aufgelöst werden kann.

Vor diesem Hintergrund ist es die Aufgabe der vorliegenden Erfindung, eine aufgeladene Brennkraftmaschine gemäß dem Oberbegriff des Anspruchs 1 d. h. der gattungsbildenden Art bereitzustellen, mit der die nach dem Stand der Technik bekannten Nachteile überwunden werden und mit der insbesondere gleichzeitig hohe Abgasrückführraten und hohe Ladedrücke, insbesondere im Teillastbereich, realisiert werden können.

Eine weitere Teilaufgabe der vorliegenden Erfindung ist es, ein Verfahren zur Beeinflussung der Menge an zurückgeführtem Abgas einer aufgeladenen Brennkraftmaschine der oben genannten Art aufzuzeigen.

Gelöst wird die erste Teilaufgabe durch eine aufgeladene Brennkraftmaschine mit mindestens zwei Zylindern, die in der Art konfiguriert sind, daß sie zwei Gruppen mit jeweils mindestens einem Zylinder bilden und beide Zylindergruppen jeweils mit einer separaten Abgasleitung ausgestattet sind, und mit zwei parallel geschalteten Abgasturboladern, wobei eine erste Turbine eines ersten Abgasturboladers in der Abgasleitung der ersten Zylindergruppe angeordnet ist und eine zweite Turbine eines zweiten Abgasturboladers in der Abgasleitung der zweiten Zylindergruppe angeordnet ist und die diesen Turbinen zugeordneten Verdichter in separaten Ansaugleitungen angeordnet sind, die stromabwärts der Verdichter zu einer Gesamtansaugleitung zusammenlaufen und zur Versorgung der Brennkraftmaschine mit Frischluft bzw. Frischgemisch dienen, und die dadurch gekennzeichnet ist, daß eine erste Leitung zur Abgasrückführung vorgesehen ist, die stromaufwärts der ersten Turbine aus der dieser ersten Turbine zugeordneten ersten Abgasleitung abzweigt und in die Gesamtansaugleitung mündet, und Mittel vorgesehen sind, mit denen der Abgasgegendruck in dieser ersten Abgasleitung beeinflußbar ist.

Die erfindungsgemäße Brennkraftmaschine ist mit zwei parallel geschalteten Abgasturboladern ausgestattet, deren Turbinen in separaten Abgasleitungen angeordnet sind. Mindestens eine der beiden separaten Abgasleitungen ist mit einem Abgasrückführsystem ausgestattet, wobei erfindungsgemäß Mittel vorgesehen sind, die eine Erhöhung und eine Senkung des Abgasgegendrucks in der ersten, zur Abgasrückführung genutzten Abgasleitung erlauben.

Der nach dem Stand der Technik nicht aufzulösende Konflikt zwischen hoher Abgasrückführrate und hohem Ladedruck kann auf diese Weise entflochten werden. Während zur Erzielung eines großen zurückgeführten Abgasstromes die erste Abgasleitung herangezogen wird, indem die vorgesehenen Mittel zum Verschließen der ersten Abgasleitung bzw. zum Verkleinern des Strömungsquerschnittes dieser Abgasleitung genutzt werden, liefert die in der zweiten Abgasleitung angeordnete Turbine bzw. der entsprechende Verdichter unbeeinflußt von der Abgasrückführung zusammen mit dem in der ersten Ansaugleitung angeordneten Verdichter den gewünschten und erforderlichen Ladedruck.

Daher ist es auch unschädlich, daß die in der ersten Abgasleitung angeordnete Turbine bei hohen Abgasrückführraten nicht mehr vom heißen Abgas durchströmt wird bzw. für diese erste Turbine nur noch ein kleiner Abgasstrom bereitgestellt wird und somit der der ersten Turbine zugeordnete erste Verdichter keine oder kaum noch Verbrennungsluft fördert bzw. verdichtet. Denn mittels des zweiten Abgasturboladers ist sichergestellt, daß auch unter Betriebsbedingungen mit umfangreicher Abgasrückführung ein auseichender Ladedruck auf der Ansaugseite aufgebaut wird.

Dadurch wird die erste der Erfindung zugrunde liegende Aufgabe gelöst, nämlich eine aufgeladene Brennkraftmaschine bereitzustellen, mit der die nach dem Stand der Technik bekannten Nachteile überwunden werden und mit der insbesondere gleichzeitig hohe Abgasrückführraten und hohe Ladedrücke, insbesondere im Teillastbereich, realisiert werden können.

Weitere vorteilhafte Ausführungsformen der Brennkraftmaschine werden im Zusammenhang mit den Unteransprüchen erörtert.

Vorteilhaft sind Ausführungsformen der Brennkraftmaschine, bei denen das Mittel zur Beeinflussung des Abgasgegendrucks ein Absperrelement, vorzugsweise ein Ventil, ist, das in der ersten Abgasleitung vorgesehen ist. Mit Hilfe des Absperrelementes wird der Strömungsquerschnitt der ersten Abgasleitung, vorzugsweise stufenlos, verändert, wobei eine Verkleinerung des Strömungsquerschnittes zu der gewünschten Erhöhung des Abgasgegendrucks führt. Die Erhöhung des Abgasgegendruckes hat auch Einfluß auf die Abgasrückführrate. Prinzipbedingt ist das Absperrelement stromabwärts der Abzweigung der ersten Leitung zur Abgasrückführung vorgesehen.

Dabei sind sowohl Ausführungsformen der Brennkraftmaschine für die Praxis relevant, bei denen die erste Abgasleitung zur Erzielung maximaler Abgasgegendrücke weitestgehend mittels Absperrelement verschlossen werden kann, als auch Ausführungsformen, bei denen diese Abgasleitung vollständig geöffnet ist.

Das Absperrelement gestattet die Aufteilung des Abgasstromes der ersten Zylindergruppe in zwei Abgasteilströme, nämlich in einen Abgasteilstrom, der durch die erste Leitung zur Abgasrückführung geleitet wird, und einen Abgasteilstrom, der durch die erste Turbine geführt wird. Dies ermöglicht eine Einflußnahme auf die Abgasrückführrate.

Vorteilhaft sind Ausführungsformen der Brennkraftmaschine, bei denen das Absperrelement elektrisch, hydraulisch, pneumatisch, mechanisch oder magnetisch steuerbar ist, vorzugsweise mittels der Motorsteuerung der Brennkraftmaschine.

Vorteilhaft sind Ausführungsformen der Brennkraftmaschine, bei denen das Absperrelement zur Beeinflussung des Abgasgegendrucks stromabwärts der ersten Turbine in der Abgasleitung angeordnet ist. Bei nicht vollständig geschlossenem Absperrelement gestattet diese Ausführungsform, daß der Abgasstrom zunächst die Turbine durchströmt bevor er das Absperrelement, welches für die Abgasströmung eine Drosselstelle bzw. einen Strömungswiderstand darstellt, passiert. Die Abgasenthapie bzw. der Abgasdruck kann auf diese Weise in der Turbine genutzt werden.

Vorteilhaft sind Ausführungsformen der Brennkraftmaschine, bei denen die erste Turbine eine variable Turbinengeometrie aufweist. Eine variable Turbinengeometrie erhöht die Flexibilität der Aufladung. Sie gestattet eine stufenlose Anpassung der Turbinengeometrie an den jeweiligen Betriebspunkt der Brennkraftmaschine. Im Gegensatz zu einer Turbine mit fester Geometrie muß kein Kompromiß bei der Auslegung der Turbine eingegangen werden, um in sämtlichen Drehzahlbereichen eine mehr oder weniger zufriedenstellende Aufladung zu realisieren. Insbesondere kann auf die energetisch nachteilige Ladeluftabblasung, aber auch auf eine Abgasabblasung, wie sie bei Waste-Gate-Turbinen vorgenommen wird, verzichtet werden.

Vorteilhaft sind - bei einer variablen Geometrie der ersten Turbine - Ausführungsformen der Brennkraftmaschine, bei denen die erste Turbine das Mittel zur Beeinflussung des Abgasgegendrucks bildet, wobei durch Verstellen der Turbine in Richtung Querschnittsverkleinerung, was durch Verdrehen der Schaufeln erfolgen kann, eine Erhöhung des Abgasgegendrucks realisierbar ist. Die veränderbare Geometrie wird bei dieser Ausführungsform genutzt, um den Abgasgegendruck auf die erfindungsgemäß vorgeschlagene Weise zu erhöhen.

Zusätzliche Bauteile, insbesondere ein separates Absperrelement, sind nicht erforderlich, wenn die ohnehin bereits vorhandene Turbine des ersten Abgasturboladers zur Beeinflussung des Drucks genutzt wird. Mit dem separaten Absperrelement entfällt auch eine separate Steuerung dieses Elementes und die dazu erforderliche Steuereinheit.

Vorteilhaft sind - insbesondere in diesem Zusammenhang - Ausführungsformen der Brennkraftmaschine, bei denen die erste Turbine kleiner ausgelegt ist als die zweite Turbine. Weist die erste Turbine eine variable Geometrie auf und ist diese Turbine kleiner ausgelegt als die zweite Turbine d.h. auf kleine Abgasmengen ausgerichtet, dann können hohe Abgasgegendrücke in der ersten Abgasleitung generiert werden. Um die erste Turbine dann auch bei hohen Lasten bzw. größeren Abgasmassenströmen betreiben zu können, muß eine Abblaseleitung vorgesehen werden, über die mit zunehmender Abgasmenge ein zunehmender Anteil des Abgases abgeblasen wird. D. h. die Turbine muß als sogenannte Waste-Gate-Turbine ausgeführt werden; eine Ausführungsform, die weiter unten noch erörtert wird.

Vorteilhaft sind aber auch Ausführungsformen der Brennkraftmaschine, bei denen die erste Turbine eine feste, nicht veränderbare Turbinengeometrie aufweist. Im Gegensatz zu der zuvor beschriebenen Turbine mit variabler Geometrie (VTG) entfällt hier prinzipbedingt eine Steuerung. Im ganzen weist diese Ausführungsform daher insbesondere Kostenvorteile auf.

Vorteilhaft sind auch Ausführungsformen der Brennkraftmaschine, bei denen die erste Turbine als Waste-Gate-Turbine ausgeführt ist. Sogenannte Waste-Gate-Turbinen verfügen zum Zwecke einer Abgasabblasung über eine die Turbine überbrückende Bypaßleitung. Eine derartige Turbine kann daher gezielt auf kleine Abgasströme ausgelegt werden, was die Qualität der Aufladung im Teillastbereich deutlich verbessert. Mit zunehmendem Abgasstrom wird ein größerer Anteil des Abgases über die Bypaßleitung an der Turbine vorbei geführt. Zur Steuerung der Abgasabblasung ist ein Absperrelement in der Bypaßleitung vorgesehen. Eine Waste-Gate-Turbine ist kostengünstiger als eine Turbine mit variabler Geometrie. Zudem ist die Steuerung einfacher und daher ebenfalls kostengünstiger als bei einer variablen Turbinengeometrie.

Vorteilhaft sind Ausführungsformen der Brennkraftmaschine, bei denen der der ersten Turbine zugeordnete erste Verdichter eine variable Verdichtergeometrie aufweist. Wie bereits im Zusammenhang mit der VTG-Turbine ausgeführt, erhöht eine variable Geometrie die Qualität und Flexibilität der Aufladung aufgrund der Möglichkeit einer stufenlosen Anpassung der Geometrie an den jeweiligen Betriebspunkt der Brennkraftmaschine.

Insbesondere, wenn nur ein sehr geringer Abgasmassenstrom durch die erste Turbine geleitet wird, erweist sich eine variable Verdichtergeometrie (VVG) als vorteilhaft, da durch Verstellen der Schaufeln die Pumpgrenze des Verdichters im Verdichterkennfeld hin zu kleinen Verdichterströmen verschoben werden kann und so ein Arbeiten des Verdichters jenseits der Pumpgrenze vermieden wird. Diese Ausführungsform ist insbesondere dann vorteilhaft, wenn die Turbine des ersten Abgasturboladers über eine variable Turbinengeometrie verfügt und die Verdichtergeometrie auf die Turbinengeometrie kontinuierlich abgestimmt wird.

Vorteilhaft sind Ausführungsformen der Brennkraftmaschine, bei denen der der ersten Turbine zugeordnete erste Verdichter eine feste, nicht veränderbare Verdichtergeometrie aufweist. Verdichter mit fester Geometrie weisen aus denselben Gründen wie Turbinen mit fester Geometrie, nämlich aufgrund der einfacheren Bauweise, Kostenvorteile auf.

Vorteilhaft sind Ausführungsformen der Brennkraftmaschine, bei denen der der ersten Turbine zugeordnete erste Verdichter mit einer Bypaßleitung ausgestattet ist, die stromabwärts des ersten Verdichters aus der ersten Ansaugleitung abzweigt und vorzugsweise stromaufwärts des ersten Verdichters in die erste Ansaugleitung mündet. Zur Steuerung der abgeblasenen Frischluftmenge ist ein Absperrelement in der Bypaßleitung vorgesehen. Der mittels Bypaßleitung überbrückbare Verdichter stellt insbesondere eine Alternative zu einer variablen Verdichtergeometrie dar.

Vorteilhaft sind Ausführungsformen der Brennkraftmaschine, bei denen stromabwärts der Verdichter ein Ladeluftkühler in der Gesamtansaugleitung angeordnet ist. Der Ladeluftkühler senkt die Lufttemperatur und steigert damit die Dichte der Luft, wodurch auch der Kühler zu einer besseren Füllung des Brennraums mit Luft d. h. zu einer größeren Luftmasse beiträgt.

Vorteilhaft sind Ausführungsformen der Brennkraftmaschine, bei denen die erste Leitung zur Abgasrückführung stromabwärts des Ladeluftkühlers in die Gesamtansaugleitung mündet. Auf diese Weise wird der Abgasstrom nicht durch den Ladeluftkühler geführt und kann folglich diesen Kühler nicht durch Ablagerungen von im Abgasstrom enthaltenen Schadstoffen, insbesondere Rußpartikeln und Öl, verschmutzen.

Vorteilhaft sind Ausführungsformen der Brennkraftmaschine, bei denen in der ersten Leitung zur Abgasrückführung ein zusätzlicher Kühler vorgesehen ist. Dieser zusätzliche Kühler senkt die Temperatur im heißen Abgasstrom und steigert damit die Dichte der Abgase. Die Temperatur der Zylinderfrischladung, die sich bei der Mischung der Frischluft mit den rückgeführten Abgasen einstellt, wird hierdurch folglich weiter gesenkt, wodurch auch der zusätzliche Kühler zu einer besseren Füllung des Brennraums mit Frischgemisch beiträgt.

Vorteilhaft sind Ausführungsformen der Brennkraftmaschine, bei denen in der ersten Leitung zur Abgasrückführung ein Absperrelement vorgesehen ist. Dieses Absperrelement dient der Steuerung der Abgasrückführrate. Anders als die Mittel, die zur Beeinflussung des Abgasgegendruckes vorgesehen sind, kann mit diesem Absperrelement die Abgasrückführung direkt gesteuert und auch völlig unterbunden werden.

Vorteilhaft sind Ausführungsformen der Brennkraftmaschine, bei denen eine zweite Leitung zur Abgasrückführung vorgesehen ist, die stromaufwärts der zweiten Turbine aus der dieser zweiten Turbine zugeordneten zweiten Abgasleitung abzweigt und in die Gesamtansaugleitung mündet. Vorteile bietet diese Ausführungsform insbesondere bei hohen Abgasrückführraten.

Bei der erfindungsgemäßen Brennkraftmaschine ist der Abgasstrom in zwei Abgasteilströme aufgeteilt. Wird - wie bei den zuvor beschriebenen Ausführungsformen - nur eine Abgasleitung zur Abgasrückführung herangezogen, können nur schwer AGR-Raten von mehr als 50% ($x_{AGR}$ > 0,5) erreicht werden, da bereits die Hälfte der Abgase für eine Rückführung nicht zur Verfügung steht. Höhere AGR-Raten können nur durch eine Verkleinerung des Verdichtermassenstromes des zweiten Verdichters erzielt werden d.h. durch eine Absenkung des Ladedrucks, was nicht gewollt ist.

Vorteilhaft ist es daher, die zweite Abgasleitung mit einer zusätzlichen zweiten Leitung zur Abgasrückführung auszustatten. Dabei liegt der Schwerpunkt der Abgasrückführung vorzugsweise unverändert auf der ersten Abgasleitung, in der gezielt der Abgasgegendruck erhöht wird. Eine asymmetrische Steuerung der beiden Abgasstränge bzw. -leitungen ist ohnehin schon durch die Mittel zur Beeinflussung des Abgasgegendrucks in der ersten Abgasleitung gegeben und gewollt. Die zweite Leitung sollte vorzugsweise nur bei der Realisierung sehr hoher AGR-Raten Verwendung finden d.h. bei AGR-Raten von mehr als 50% zum Einsatz kommen. Auf diese Weise können hohe Ladedrücke und hohe AGR-Raten verwirklicht werden.

Vorteilhaft sind Ausführungsformen der Brennkraftmaschine, bei denen die zweite Leitung zur Abgasrückführung stromabwärts des Ladeluftkühlers in die Gesamtansaugleitung mündet.

Vorteilhaft sind ebenfalls Ausführungsformen der Brennkraftmaschine, bei denen in der zweiten Leitung zur Abgasrückführung ein zusätzlicher Kühler vorgesehen ist.

Die Vorteile der beiden zuletzt genannten Ausführungsformen wurden bereits im Zusammenhang mit der ersten Leitung zur Abgasrückführung dargelegt, weshalb an dieser Stelle Bezug genommen wird auf die entsprechenden Ausführungen.

Vorteilhaft sind Ausführungsformen der Brennkraftmaschine, bei denen in der zweiten Leitung zur Abgasrückführung ein Absperrelement vorgesehen ist. Dieses Absperrelement dient zusammen mit dem in der ersten Leitung angeordneten Absperrelement und den Mitteln zur Beeinflussung des Abgasgegendruckes in der ersten Abgasleitung zur Einstellung der AGR-Rate.

Im folgenden werden die bevorzugten Bauweisen der Turbine und des Verdichters des zweiten Abgasturboladers aufgeführt. Die Vorteile der einzelnen Bauweisen, nämlich der variablen Geometrie, der festen Geometrie sowie der Waste-Gate-Bauweise wurden bereits ausführlich im Zusammenhang mit dem ersten Abgasturbolader bzw. der ersten Turbine und dem ersten Verdichter erörtert, weshalb an dieser Stelle auf die entsprechenden Ausführungen Bezug genommen wird, um Wiederholungen zu vermeiden.

Vorteilhaft sind Ausführungsformen der Brennkraftmaschine, bei denen die zweite Turbine eine variable Turbinengeometrie aufweist. Dadurch wird insbesondere die Qualität und Flexibilität der Aufladung erhöht. Die Geometrie kann dem Abgasmassenstrom durch Verstellen der Laufradschaufeln angepaßt werden.

Vorteilhaft sind Ausführungsformen der Brennkraftmaschine, bei denen die zweite Turbine eine feste, nicht veränderbare Turbinengeometrie aufweist. Hierdurch wird ein kostengünstiges Aufladekonzept ermöglicht.

Vorteilhaft sind Ausführungsformen der Brennkraftmaschine, bei denen die zweite Turbine als Waste-Gate-Turbine ausgeführt ist. Hierdurch wird ein kostengünstiges Aufladekonzept ermöglicht und gleichzeitig eine Auslegung der Turbine auf kleine Abgasmassenströme d.h. auf den Teillastbereich, der insbesondere im Hinblick auf die zur Bestimmung der Schadstoffemissionen relevanten Tests von Interesse ist.

Vorteilhaft sind Ausführungsformen der Brennkraftmaschine, bei denen der der zweiten Turbine zugeordnete zweite Verdichter eine variable Verdichtergeometrie aufweist. Wie oben bereits erwähnt bietet die variable Geometrie insbesondere Vorteile im Hinblick auf die Pumpgrenze des Verdichters durch Verschieben dieser Pumpgrenze. Es können auch bei einem kleinen Frischluftmassenstrom hohe Ladedrücke generiert werden.

Vorteilhaft sind Ausführungsformen der Brennkraftmaschine, bei denen der der zweiten Turbine zugeordnete zweite Verdichter eine feste, nicht veränderbare Verdichtergeometrie aufweist. Kostenvorteile und die Vereinfachung der Motorsteuerung der gesamten Brennkraftmaschine stehen dabei im Vordergrund.

Vorteilhaft sind Ausführungsformen der Brennkraftmaschine, bei denen der der zweiten Turbine zugeordnete zweite Verdichter mit einer Bypaßleitung ausgestattet ist, die stromabwärts des zweiten Verdichters aus der zweiten Ansaugleitung abzweigt und vorzugsweise stromaufwärts des zweiten Verdichters in die zweite Ansaugleitung mündet. Der mittels Bypaßleitung überbrückbare Verdichter stellt insbesondere eine Alternative zu einer variablen Verdichtergeometrie dar.

Vorteilhaft sind Ausführungsformen der Brennkraftmaschine, bei denen stromabwärts des der ersten Turbine zugeordneten ersten Verdichters ein Absperrelement in der ersten Ansaugleitung vorgesehen ist. Dieses Absperrelement dient dazu, den ersten Verdichter vom übrigen Ansaugsystem zu trennen. Auf diese Weise wird vermieden, daß der zweite Verdichter in den ersten Verdichter hinein fördert. Dies ist beispielsweise zu befürchten, wenn die erste Abgasleitung zur Realisierung hoher AGR-Raten eingesetzt wird, der erste Verdichter nahezu keine Verbrennungsluft fördert und - gegebenenfalls ausschließlich - der zweite Verdichter zur Generierung des erforderlichen Ladedruckes und der Bereitstellung der erforderlichen Luftmasse verwendet wird. Dabei baut sich ein Druckgefälle zwischen den Verdichtern auf, wobei der Druck stromaufwärts des zweiten Verdichters größer ist als der Druck stromaufwärts des ersten Verdichters.

Die zweite der Erfindung zugrunde liegende Teilaufgabe wird gelöst durch ein Verfahren zur Beeinflussung der Menge an zurückgeführtem Abgas einer aufgeladenen Brennkraftmaschine der oben genannten Art, das dadurch gekennzeichnet ist, daß die Menge an zurückgeführtem Abgas durch eine Veränderung des Abgasgegendrucks in der ersten Abgasleitung beeinflußt wird.

Das im Zusammenhang mit der erfindungsgemäßen Brennkraftmaschine Gesagte gilt ebenfalls für das erfindungsgemäße Verfahren. Durch die Aufteilung des Abgasstromes in zwei separate Abgasteilströme und das Vorsehen von Mitteln zur Beeinflussung des Abgasgegendrucks in einer der beiden Abgasleitungen ist es möglich, hohe AGR-Raten und gleichzeitig hohe Ladedrücke zu realisieren.

Obwohl die Anordnung der beiden Abgasturbolader in den beiden Abgasleitungen symmetrisch sein kann in der Art, daß beispielsweise beide Turbolader von gleicher Baugröße sind, werden die beiden Abgasleitungen und die beiden in den Abgasleitungen vorgesehenen Turbinen doch unterschiedlich betrieben bzw. gesteuert. Während die erste Abgasleitung bzw. die erste Turbine vorwiegend im Hinblick auf die Abgasrückführung verwendet wird, dient die zweite Abgasleitung bzw. die zweite Turbine in erster Linie der Erzeugung eines genügend hohen Ladedrucks.

Vorteilhaft sind Ausführungsformen des Verfahrens, bei denen die Menge an zurückgeführtem Abgas durch eine Steigerung des Abgasgegendrucks in der ersten Abgasleitung erhöht wird.

Bei Brennkraftmaschinen, bei denen das Mittel zur Beeinflussung des Abgasgegendruckes ein Absperrelement ist, das in der ersten Abgasleitung vorgesehen ist und vorzugsweise stromabwärts der ersten Turbine in der Abgasleitung angeordnet ist, sind Ausführungsformen des Verfahrens vorteilhaft, bei denen der Abgasgegendruck in der ersten Abgasleitung durch Verstellen des Absperrelementes in Richtung Schließstellung gesteigert wird.

Bei Brennkraftmaschinen, bei denen die erste Turbine eine variable Turbinengeometrie aufweist, sind Ausführungsformen des Verfahrens vorteilhaft, bei denen der Abgasgegendruck in der ersten Abgasleitung durch Verstellen der variablen Turbinengeometrie der ersten Turbine in Richtung Schließstellung d.h. in Richtung kleinerer Turbinenquerschnitte gesteigert wird.

Vorteilhaft sind Ausführungsformen des Verfahrens, bei denen die Menge an zurückgeführtem Abgas durch eine Reduzierung des Abgasgegendrucks in der ersten Abgasleitung gesenkt wird.

Bei Brennkraftmaschinen, bei denen das Mittel zur Beeinflussung des Abgasgegendruckes ein Absperrelement ist, das in der ersten Abgasleitung vorgesehen ist und vorzugsweise stromabwärts der ersten Turbine in der Abgasleitung angeordnet ist, sind Ausführungsformen des Verfahrens vorteilhaft, bei denen der Abgasgegendruck in der ersten Abgasleitung durch Verstellen des Absperrelementes in Richtung Offenstellung reduziert wird.

Bei Brennkraftmaschinen, bei denen die erste Turbine eine variable Turbinengeometrie aufweist, sind Ausführungsformen des Verfahrens vorteilhaft, bei denen der Abgasgegendruck in der ersten Abgasleitung durch Verstellen der variablen Turbinengeometrie der ersten Turbine in Richtung Offenstellung d.h. in Richtung größerer Turbinenquerschnitte reduziert wird.

Bei Brennkraftmaschinen, bei denen eine zweite Leitung zur Abgasrückführung vorgesehen ist, die stromaufwärts der zweiten Turbine aus der dieser zweiten Turbine zugeordneten zweiten Abgasleitung abzweigt und in die Gesamtansaugleitung mündet, sind Ausführungsformen des Verfahrens vorteilhaft, bei denen zur Erzielung hoher Abgasrückführraten sowohl die erste als auch die zweite Leitung verwendet wird.

Im folgenden wird die Erfindung anhand von acht Ausführungsbeispielen gemäß den Figuren 1 bis 8 näher beschrieben. Hierbei zeigt:

Fig. 1    schematisch eine erste Ausführungsform der Brennkraftmaschine,

Fig. 2    schematisch eine zweite Ausführungsform der Brennkraftmaschine,

Fig. 3    schematisch eine dritte Ausführungsform der Brennkraftmaschine,

Fig. 4    schematisch eine vierte Ausführungsform der Brennkraftmaschine,

Fig. 5    schematisch eine fünfte Ausführungsform der Brennkraftmaschine,

Fig. 6    schematisch eine sechste Ausführungsform der Brennkraftmaschine,

Fig. 7    schematisch eine siebte Ausführungsform der Brennkraftmaschine, und

Fig. 8    schematisch eine achte Ausführungsform der Brennkraftmaschine.

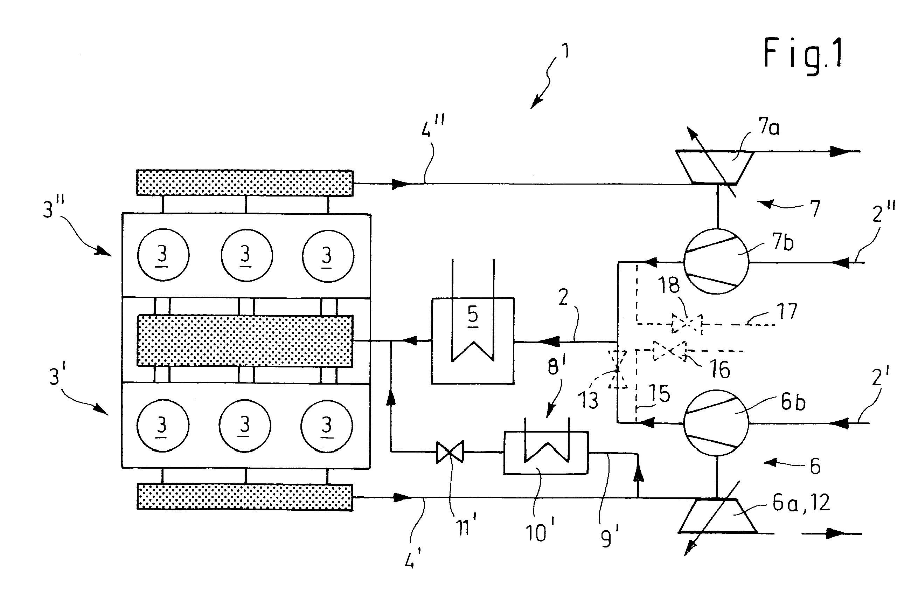

Figur 1 zeigt eine erste Ausführungsform der aufgeladenen Brennkraftmaschine 1 am Beispiel eines Sechs-Zylinder-V-Motors. Die Zylinder 3 der Brennkraftmaschine 1 sind in zwei Zylindergruppen 3',3" aufgeteilt, die jeweils über eine separate Abgasleitung 4',4" verfügen, die mit der jeweils anderen Abgasleitung 4',4" nicht in Verbindung steht.

Es sind zwei parallel geschaltete Abgasturbolader 6,7 vorgesehen, wobei die erste Turbine 6a des ersten Abgasturboladers 6 in der ersten Abgasleitung 4' der ersten Zylindergruppe 3' und die zweite Turbine 7a des zweiten Abgasturboladers 7 in der zweiten Abgasleitung 4" der zweiten Zylindergruppe 3" angeordnet ist.

Die diesen Turbinen 6a,7a zugeordneten Verdichter 6b,7b sind ebenfalls in separaten Ansaugleitungen 2',2" angeordnet, die stromabwärts der Verdichter 6b,7b zu einer Gesamtansaugleitung 2 zusammenlaufen und zur Versorgung der Brennkraftmaschine 1 mit Frischluft bzw. Frischgemisch dienen.

Stromabwärts der Verdichter 6b,7b ist ein Ladeluftkühler 5 in der Gesamtansaugleitung 2 angeordnet. Der Ladeluftkühler 5 senkt die Lufttemperatur und steigert damit die Dichte der Luft, wodurch er zu einer besseren Füllung des Brennraums mit Luft beiträgt.

Bei der in der Figur 1 dargestellten Ausführungsform verfügt sowohl die Turbine 6a des ersten Abgasturboladers 6 als auch die Turbine 7a des zweiten Abgasturboladers 7 über eine variable Turbinengeometrie (VTG - kenntlich gemacht durch den Pfeil), die eine stufenlose Anpassung der Turbinengeometrie an den jeweiligen Betriebspunkt der Brennkraftmaschine 1 ermöglicht. Dadurch wird insbesondere die Qualität und Flexibilität der Aufladung erhöht. Die Geometrie der Turbine 6b,7b kann dem momentanen Abgasmassenstrom durch Verstellen der Laufradschaufeln angepaßt werden.

Die Verdichter 6b,7b können eine feste Geometrie aufweisen oder ebenfalls mit einer variablen Geometrie ausgeführt sein. Eine variable Geometrie ist vorteilhaft, wenn die entsprechende Turbine 6a,7a über eine variable Turbinengeometrie verfügt und die Verdichtergeometrie auf die Turbinengeometrie kontinuierlich abgestimmt wird. Insbesondere bei kleinen Abgasmassenströmen durch die Turbine 6a,7a und den damit verbundenen kleinen Verdichtermassenströmen erweist sich eine variable Verdichtergeometrie (VVG) als vorteilhaft, da durch Verstellen der Schaufeln die Pumpgrenze des Verdichters 6b,7b im Verdichterkennfeld hin zu kleinen Verdichterströmen verschoben werden kann und so ein Arbeiten des Verdichters 6b,7b jenseits der Pumpgrenze vermieden wird. Grundsätzlich können die Verdichter 6a, 7a auch mit einer Leitung zur Ladeluftabblasung ausgestattet sein, was aber aus energetischen Gründen Nachteile aufweist.

Die in Figur 1 dargestellte Brennkraftmaschine 1 ist mit einer Abgasrückführung 8' ausgestattet. Hierzu ist eine erste Leitung 9' zur Abgasrückführung vorgesehen, die stromaufwärts der ersten Turbine 6a aus der dieser ersten Turbine 6a zugeordneten ersten Abgasleitung 4' abzweigt und in die Gesamtansaugleitung 2 mündet. Dabei mündet die erste Leitung 9' zur Abgasrückführung stromabwärts des Ladeluftkühlers 5 in die Gesamtansaugleitung 2. Auf diese Weise wird der Abgasstrom nicht durch den Ladeluftkühler 5 geführt und kann diesen Kühler 5 nicht verschmutzen.

In der ersten Leitung 9' ist ein zusätzlicher Kühler 10' vorgesehen, der die Temperatur des heißen Abgasstromes senkt. Ebenfalls in der ersten Leitung 9' ist zur Steuerung der Abgasrückführrate ein Absperrelement 11' angeordnet.

Erfindungsgemäß werden Mittel 12 vorgesehen, mit denen der Abgasgegendruck in der ersten Abgasleitung 4' beeinflußbar ist. Bei der in Figur 1 dargestellten Ausführungsform dient die erste Turbine 6a zur Beeinflussung des Abgasgegendrucks. Durch Verstellen der Turbine 6a in der Art, daß der Turbinenquerschnitt verkleinert wird, kann der Abgasgegendruck erhöht werden. Durch Beeinflussung des Abgasgegendrucks wird auch Einfluß genommen auf die Druckdifferenz zwischen der ersten Abgasleitung 4' und der Gesamtansaugleitung 2, in der der Ladedruck vorherrscht, der mittels der Verdichter 6b,7b generiert wird. Die Druckdifferenz ist die treibende Kraft bei der Abgasrückführung. Zwingend erforderlich für die Rückführung heißen Abgases ist ein Druckgefälle hin zur Gesamtansaugleitung 2 d. h. ein Abgasgegendruck, der größer ist als der Ladedruck.

Zur Erzeugung sehr hoher Abgasgegendrücke wird die erste Turbine 6a sehr klein dimensioniert bzw. auf sehr kleine Abgasmassenströme ausgelegt. Um die Turbine 6a dann auch bei größeren Lasten bzw. Abgasmassenströmen betreiben zu können, ist eine die Turbine 6a überbrückende Abblaseleitung erforderlich (nicht dargestellt).

Stromabwärts des ersten Verdichters 6b kann ein Absperrelement 13 (strichpunktiert angedeutet) in der ersten Ansaugleitung 2' vorgesehen werden, mit dem der erste Verdichter 6b vom übrigen Ansaugsystem getrennt wird. Auf diese Weise wird vermieden, daß der zweite Verdichter 7b in den ersten Verdichter 6b hinein fördert. Dies ist immer dann zu befürchten, wenn der Ladedruck des ersten Verdichters 6b kleiner als der Ladedruck des zweiten Verdichters 7b ist. Beispielsweise wenn die erste Abgasleitung 4' zur Realisierung hoher AGR-Raten nahezu vollständig verschlossen wird und der erste Verdichter 6b nahezu keine Verbrennungsluft fördert, da die erste Turbine 6a gar nicht mehr bzw. nur noch von einem kleinen Abgasmassenstrom durchströmt wird. Dann wird fast ausschließlich der zweite Verdichter 7b zur Generierung des erforderlichen Ladedruckes und der Bereitstellung der erforderlichen Luftmasse verwendet. Dabei baut sich ein Druckgefälle zwischen den Verdichtern 6b,7b auf, wobei der Druck stromaufwärts des zweiten Verdichters 7b größer ist als der Druck stromaufwärts des ersten Verdichters 6b.

Sowohl der erste Verdichter 6b als auch der zweite Verdichter 7b können mit einer Bypaßleitung 15,17 ausgestattet werden, die stromabwärts des Verdichters 6b,7b aus der Ansaugleitung 2',2'' abzweigt und in der ein Absperrelement 16,18 angeordnet ist (gestrichelt dargestellt). Diese Bypaßleitungen dienen der Ladeluftabblasung und damit der Einstellung der Frischluftmenge bzw. des Ladedrucks. Sie können grundsätzlich stromaufwärts des Verdichters 6b,7b wieder in die Ansaugleitung 2',2'' einmünden, so daß die abgeblasene Frischluft lediglich zurückgeführt wird.

Die Turbinen 6a,7a können mit Abblaseleitungen zum Abblasen des Abgases ausgestattet werden (nicht dargestellt). Dies ist insbesondere dann vorteilhaft, wenn die Turbine 6a,7a auf kleine Lasten bzw. kleine Abgasmassenströme ausgelegt ist und gewährleistet werden muß, daß die Turbine 6a,7a auch bei höheren Lasten betrieben werden kann, wobei bei den dann anfallenden größeren Abgasmassenströmen eine zunehmende Menge an Abgas an der Turbine 6a,7a vorbei abgeblasen wird.

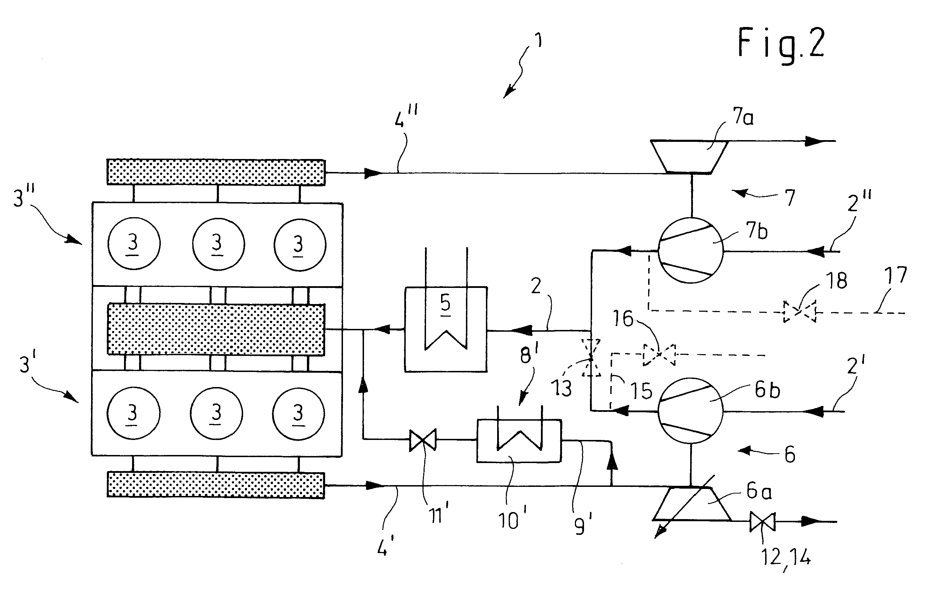

Figur 2 zeigt schematisch eine zweite Ausführungsform der aufgeladenen Brennkraftmaschine 1. Es sollen nur die Unterschiede zu der in Figur 1 dargestellten Ausführungsform erörtert werden, weshalb im übrigen bezug genommen wird auf Figur 1. Für dieselben Bauteile wurden dieselben Bezugszeichen verwendet.

Im Unterschied zu der in Figur 1 dargestellten Ausführungsform ist bei der in Figur 2 dargestellten Brennkraftmaschine 1 die zweite Turbine 7a mit einer festen d.h. unveränderlichen Turbinengeometrie ausgeführt. Im Gegensatz zu der zuvor beschriebenen Ausführungsform der Turbine mit variabler Geometrie (VTG) entfällt hier prinzipbedingt eine Steuerung. Im ganzen weist diese Ausführungsform insbesondere Kostenvorteile auf.

Ein weiterer Unterschied zu der Ausführungsform gemäß Figur 1 besteht darin, daß als Mittel 12 zur Beeinflussung des Abgasgegendrucks ein separates Absperrelement 14 stromabwärts der ersten Turbine 6a in der ersten Abgasleitung 2' vorgesehen ist. Mit dem Absperrelement 14 wird der Strömungsquerschnitt der ersten Abgasleitung 14 stufenlos verändert. Eine Verkleinerung des Strömungsquerschnittes erhöht den Abgasgegendruck.

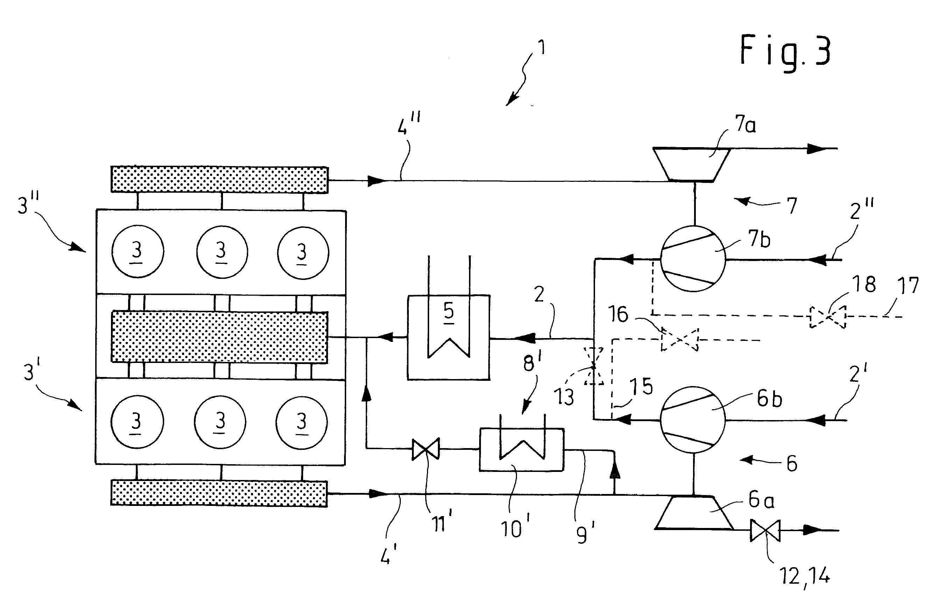

Figur 3 zeigt schematisch eine dritte Ausführungsform der aufgeladenen Brennkraftmaschine 1. Es sollen nur die Unterschiede zu der in Figur 2 dargestellten Ausführungsform erörtert werden, weshalb im übrigen bezug genommen wird auf Figur 2. Für dieselben Bauteile wurden dieselben Bezugszeichen verwendet.

Im Unterschied zu der in Figur 2 dargestellten Ausführungsform ist bei der in Figur 3 dargestellten Brennkraftmaschine 1 die erste Turbine 6a ebenfalls mit einer festen d. h. unveränderlichen Turbinengeometrie ausgeführt, was wiederum Kostenvorteile aufgrund der kostengünstigeren Turbinenbauart und dem Wegfall einer aufwendigen Steuerung hat.

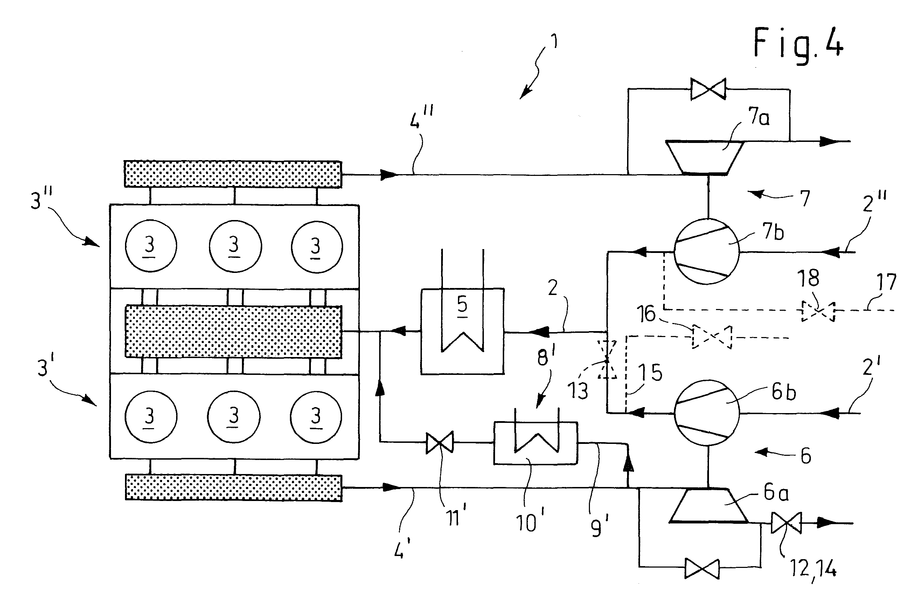

Figur 4 zeigt schematisch eine vierte Ausführungsform der aufgeladenen Brennkraftmaschine 1. Es sollen nur die Unterschiede zu der in Figur 3 dargestellten Ausführungsform erörtert werden, weshalb im übrigen bezug genommen wird auf Figur 3. Für dieselben Bauteile wurden dieselben Bezugszeichen verwendet.

Im Unterschied zu der in Figur 3 dargestellten Ausführungsform sind bei der in Figur 4 dargestellten Brennkraftmaschine 1 beide Turbinen 6a,7a als Waste-Gate-Turbinen ausgebildet. Die Waste-Gate-Turbinen 6a,7a verfügen zum Zwecke einer Abgasabblasung über eine die Turbine 6a,7a umgehende Bypaßleitung, was ein Kennzeichen dieser speziellen Turbinenbauweise ist. Die Turbine 6a,7a wird auf kleine Abgasströme ausgelegt, was die Qualität der Aufladung im Teillastbereich deutlich verbessert. Mit zunehmendem Abgasstrom wird ein größerer Anteil des Abgases über die Bypaßleitung an der Turbine 6a,7a vorbei geführt. Zur Steuerung der Abgasabblasung ist ein Absperrelement in der Bypaßleitung vorgesehen.

Im Hinblick auf die Ausbildung einer erfindungsgemäßen Brennkraftmaschine 1 ist es erforderlich, daß die Bypaßleitung der ersten als Waste-Gate-Turbine ausgebildeten Turbine 6a stromaufwärts des in der Abgasleitung 4' angeordneten Absperrelementes 14 in die Abgasleitung 4' einmündet, damit allein mit diesem Absperrelement 14 der Abgasgegendruck beeinflußt bzw. erhöht werden kann.

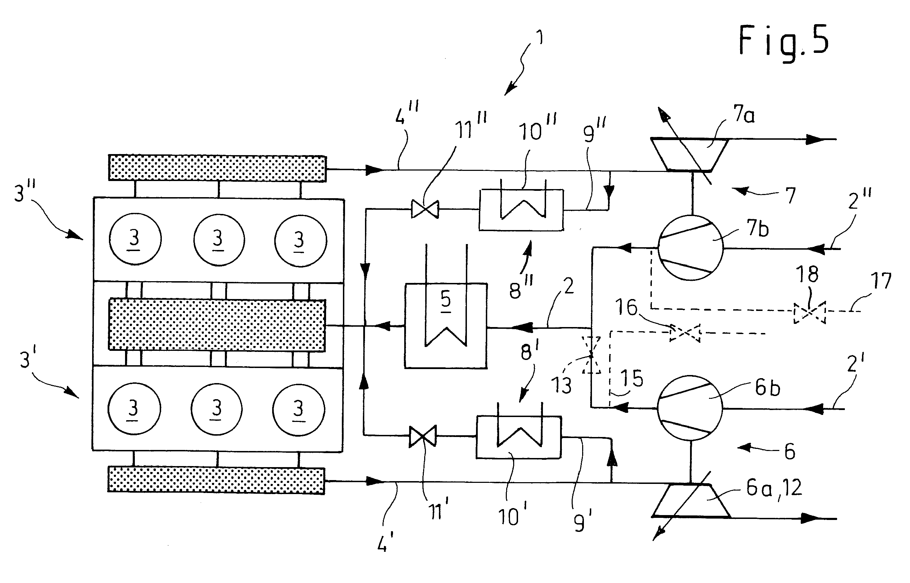

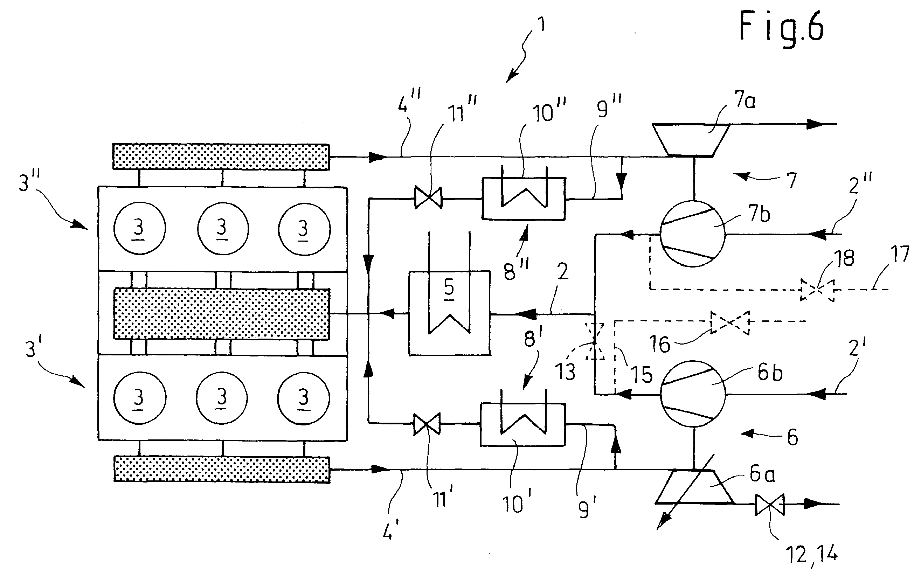

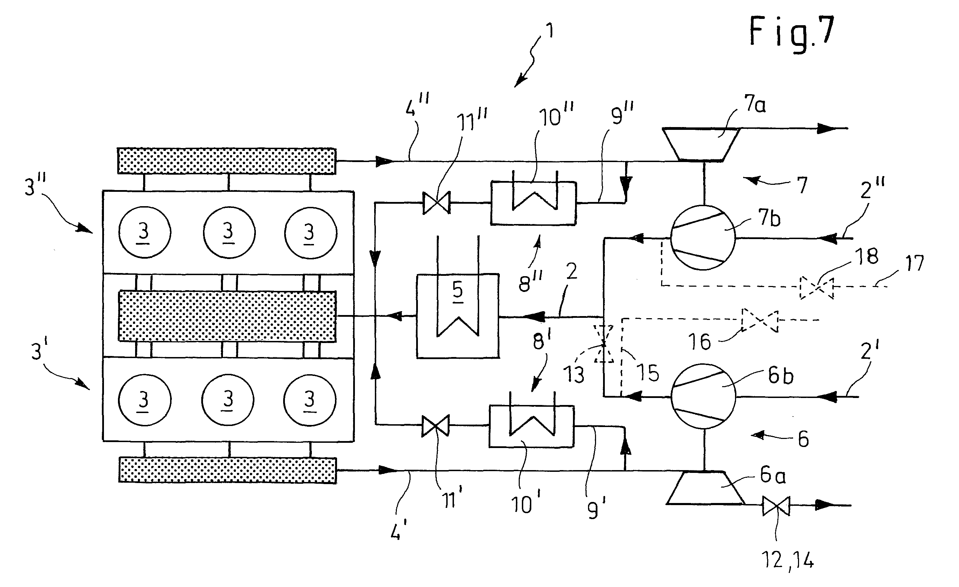

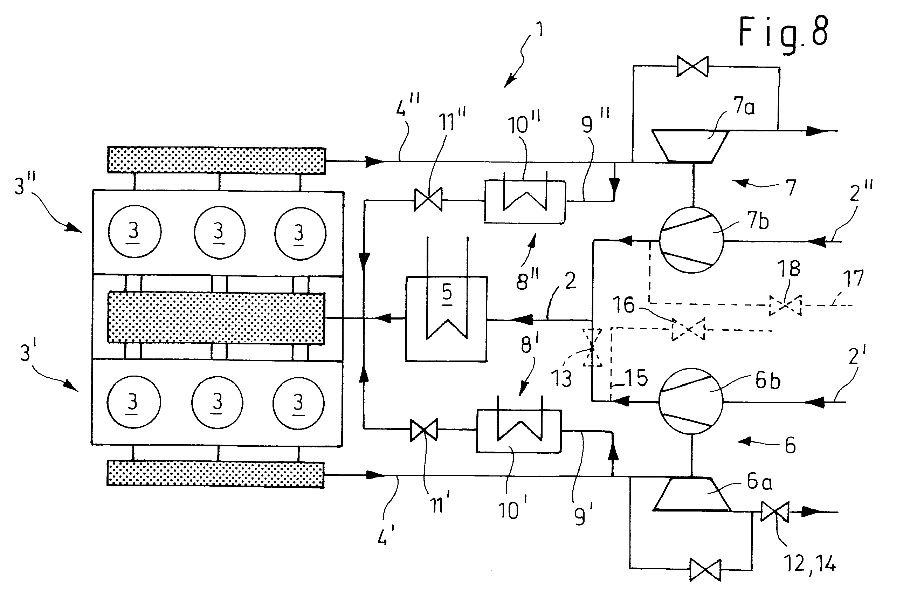

Die Figuren 5 bis 8 zeigen schematisch vier weitere Ausführungsformen der aufgeladenen Brennkraftmaschine 1. Diese Ausführungsformen entsprechen mit Ausnahme eines technischen Merkmals, das im folgenden beschrieben wird, den in den Figuren 1 bis 4 dargestellten Varianten. Es soll nur dieses eine, die Ausführungsformen unterscheidende Merkmal erörtert werden, weshalb im übrigen bezug genommen wird auf die Figuren 1 bis 4. Für dieselben Bauteile wurden dieselben Bezugszeichen verwendet.

Im Unterschied zu den in den Figuren 1 bis 4 dargestellten Ausführungsformen ist bei den in den Figuren 5 bis 8 dargestellten aufgeladenen Brennkraftmaschinen 1 eine zweite Abgasrückführung 8'' vorgesehen. Hierzu zweigt eine zweite Leitung 9'' stromaufwärts der zweiten Turbine 7a aus der zweiten Abgasleitung 4'' ab und mündet stromabwärts des Ladeluftkühlers 5 in die Gesamtansaugleitung 2.

Wie bei der ersten Leitung 9' zur Abgasrückführung ist auch in der zweiten Leitung 9'' zur Abgasrückführung ein zusätzlicher Kühler 10''und ein Absperrelement 11'' vorgesehen.

Eine zweite, zusätzliche Abgasrückführung 8'' ist insbesondere im Hinblick auf hohe AGR-Raten, insbesondere für AGR-Raten von mehr als 50% ($x_{AGR} > 0,5$), vorteilhaft. Wird nur eine Abgasleitung 4' zur Abgasrückführung herangezogen, lassen sich AGR-Raten von mehr als 50% ($x_{AGR} > 0,5$) nur unter Inkaufnahme von unakzeptablen Nachteilen realisieren. Der Grund hierfür ist, daß erfindungsgemäß kein Gesamtabgasstrom vorliegt, sondern zwei voneinander isolierte Abgasteilströme. Somit steht bei Verwendung nur einer Abgasrückführung 8', wie in den Figuren 1 bis 4 dargestellt, bereits die Hälfte der Abgase für eine Rückführung nicht zur Verfügung, nämlich die Abgase, die durch die zweite Abgasleitung 4" geleitet werden. Höhere AGR-Raten können dann nur durch eine Verkleinerung des Verdichtermassenstromes des zweiten Verdichters 7b erzielt werden d. h. durch eine Absenkung des Ladedrucks, was gerade vermieden werden soll.

Zielführend - und die bevorzugte Ausführungsform - ist daher nur eine zweite Abgasrückführung 8". Der Schwerpunkt der Abgasrückführung liegt dabei unverändert auf der ersten Abgasleitung 4'. Eine asymmetrische Steuerung der beiden Abgasleitungen 4',4" ist durch die Mittel 12 zur Beeinflussung des Abgasgegendrucks in der ersten Abgasleitung 4' möglich und gewollt. Die zweite Leitung 9" bzw. zweite Abgasrückführung 8" findet bei der Realisierung sehr hoher AGR-Raten Verwendung d.h. bei AGR-Raten von mehr als 50%. Vorrangig dient die zweite Abgasleitung 4" der Realisierung hoher Ladedrücke.

**Bezugszeichen**

| | |
|---|---|
| 1 | aufgeladene Brennkraftmaschine |
| 2 | Gesamtansaugleitung |
| 2' | erste Ansaugleitung |
| 2" | zweite Ansaugleitung |
| 3 | Zylinder |
| 3' | erste Zylindergruppe |
| 3" | zweite Zylindergruppe |
| 4' | erste Abgasleitung |
| 4" | zweite Abgasleitung |
| 5 | Ladeluftkühler |
| 6 | erster Abgasturbolader |
| 6a | erste Turbine |
| 6b | erster Verdichter |
| 7 | zweiter Abgasturbolader |
| 7a | zweite Turbine |
| 7b | zweiter Verdichter |
| 8' | Abgasrückführung |
| 8" | Abgasrückführung |
| 9' | erste Leitung |
| 9" | zweite Leitung |
| 10' | Kühler |
| 10" | Kühler |
| 11' | Absperrelement |
| 11" | Absperrelement |
| 12 | Mittel zur Beeinflussung des Abgasgegendrucks |
| 13 | Absperrelement |
| 14 | Absperrelement |
| 15 | erste Bypaßleitung |
| 16 | Absperrelement |
| 17 | zweite Bypaßleitung |
| 18 | Absperrelement |
| AGR | Abgasrückführung |

| | |
|---|---|
| $m_{AGR}$ | Masse an zurückgeführtem Abgas |
| $m_{Frischluft}$ | Masse an zugeführter Frischluft bzw. Verbrennungsluft |
| VTG | variable Turbinengeometrie |
| VVG | variable Verdichtergeometrie |
| $x_{AGR}$ | Abgasrückführrate |

**Patentansprüche**

1. Aufgeladene Brennkraftmaschine (1) mit mindestens zwei Zylindern (3), die in der Art konfiguriert sind, daß sie zwei Gruppen (3',3") mit jeweils mindestens einem Zylinder (3) bilden und beide Zylindergruppen (3',3") jeweils mit einer separaten Abgasleitung (4',4") ausgestattet sind, und mit zwei parallel geschalteten Abgasturboladern (6,7), wobei eine erste Turbine (6a) eines ersten Abgasturboladers (6) in der Abgasleitung (4') der ersten Zylindergruppe (3') angeordnet ist und eine zweite Turbine (7a) eines zweiten Abgasturboladers (7) in der Abgasleitung (4") der zweiten Zylindergruppe (3") angeordnet ist und die diesen Turbinen (6a,7a) zugeordneten Verdichter (6b,7b) in separaten Ansaugleitungen (2', 2") angeordnet sind, die stromabwärts der Verdichter (6b,7b) zu einer Gesamtansaugleitung (2) zusammenlaufen und zur Versorgung der Brennkraftmaschine (1) mit Frischluft bzw. Frischgemisch dienen,
**dadurch gekennzeichnet, daß**
eine erste Leitung (9') zur Abgasrückführung vorgesehen ist, die stromaufwärts der ersten Turbine (6a) aus der dieser ersten Turbine (6a) zugeordneten ersten Abgasleitung (4') abzweigt und in die Gesamtansaugleitung (2) mündet, und Mittel (12) vorgesehen sind, mit denen der Abgasgegendruck in dieser ersten Abgasleitung (4') beeinflußbar ist.

2. Aufgeladene Brennkraftmaschine (1) nach Anspruch 1,
**dadurch gekennzeichnet, daß**
das Mittel (12) zur Beeinflussung des Abgasgegendrucks ein Absperrelement (14), vorzugsweise ein Ventil, ist, das in der ersten Abgasleitung (4') vorgesehen ist.

3. Aufgeladene Brennkraftmaschine (1) nach Anspruch 1 oder 2,
**dadurch gekennzeichnet, daß**
das Absperrelement (14) zur Beeinflussung des Abgasgegendrucks stromabwärts der ersten Turbine (6a) in der Abgasleitung (4') angeordnet ist.

4. Aufgeladene Brennkraftmaschine (1) nach einem der vorherigen Ansprüche,
**dadurch gekennzeichnet, daß**
die erste Turbine (6a) eine variable Turbinengeometrie aufweist.

**5.** Aufgeladene Brennkraftmaschine (1) nach Anspruch 4,
**dadurch gekennzeichnet, daß**
die erste Turbine (6a) das Mittel (12) zur Beeinflussung des Abgasgegendrucks bildet, wobei durch Verstellen der Turbine (6a) in Richtung Querschnittsverkleinerung eine Erhöhung des Abgasgegendrucks realisierbar ist.

**6.** Aufgeladene Brennkraftmaschine (1) nach einem der vorherigen Ansprüche,
**dadurch gekennzeichnet, daß**
die erste Turbine (6a) kleiner ausgelegt ist als die zweite Turbine (7a).

**7.** Aufgeladene Brennkraftmaschine (1) nach einem der Ansprüche 1 bis 3,
**dadurch gekennzeichnet, daß**
die erste Turbine (6a) eine feste, nicht veränderbare Turbinengeometrie aufweist.

**8.** Aufgeladene Brennkraftmaschine (1) nach einem der Ansprüche 1 bis 7,
**dadurch gekennzeichnet, daß**
die erste Turbine (6a) als Waste-Gate-Turbine ausgeführt ist.

**9.** Aufgeladene Brennkraftmaschine (1) nach einem der vorherigen Ansprüche,
**dadurch gekennzeichnet, daß**
der der ersten Turbine (6a) zugeordnete erste Verdichter (6b) eine variable Verdichtergeometrie aufweist.

**10.** Aufgeladene Brennkraftmaschine (1) nach einem der Ansprüche 1 bis 8,
**dadurch gekennzeichnet, daß**
der der ersten Turbine (6a) zugeordnete erste Verdichter (6b) eine feste, nicht veränderbare Verdichtergeometrie aufweist.

**11.** Aufgeladene Brennkraftmaschine (1) nach einem der vorherigen Ansprüche,
**dadurch gekennzeichnet, daß**
der der ersten Turbine (6a) zugeordnete erste Verdichter (6b) mit einer ersten Bypaßleitung (15) ausgestattet ist, die stromabwärts des ersten Verdichters (6b) aus der ersten Ansaugleitung (2') abzweigt und vorzugsweise stromaufwärts des ersten Verdichters (6b) in die erste Ansaugleitung (2') mündet.

**12.** Aufgeladene Brennkraftmaschine (1) nach einem der vorherigen Ansprüche,
**dadurch gekennzeichnet, daß**
stromabwärts der Verdichter (6b,7b) ein Ladeluftkühler (5) in der Gesamtansaugleitung (2) angeordnet ist.

**13.** Aufgeladene Brennkraftmaschine (1) nach Anspruch 12,
**dadurch gekennzeichnet, daß**
die erste Leitung (9') zur Abgasrückführung stromabwärts des Ladeluftkühlers (5) in die Gesamtansaugleitung (2) mündet.

**14.** Aufgeladene Brennkraftmaschine (1) nach einem der vorherigen Ansprüche,
**dadurch gekennzeichnet, daß**
in der ersten Leitung (9') zur Abgasrückführung ein zusätzlicher Kühler (10') vorgesehen ist.

**15.** Aufgeladene Brennkraftmaschine (1) nach einem der vorherigen Ansprüche,
**dadurch gekennzeichnet, daß**
in der ersten Leitung (9') zur Abgasrückführung ein Absperrelement (11') vorgesehen ist.

**16.** Aufgeladene Brennkraftmaschine (1) nach einem der vorherigen Ansprüche,
**dadurch gekennzeichnet, daß**
eine zweite Leitung (9") zur Abgasrückführung vorgesehen ist, die stromaufwärts der zweiten Turbine (7a) aus der dieser zweiten Turbine (7a) zugeordneten zweiten Abgasleitung (4") abzweigt und in die Gesamtansaugleitung (2) mündet.

**17.** Aufgeladene Brennkraftmaschine (1) nach Anspruch 16,
**dadurch gekennzeichnet, daß**
die zweite Leitung (9") zur Abgasrückführung stromabwärts des Ladeluftkühlers (5) in die Gesamtansaugleitung (2) mündet.

**18.** Aufgeladene Brennkraftmaschine (1) nach Anspruch 16 oder 17,
**dadurch gekennzeichnet, daß**
in der zweiten Leitung (9") zur Abgasrückführung ein zusätzlicher Kühler (10") vorgesehen ist.

**19.** Aufgeladene Brennkraftmaschine (1) nach einem der Ansprüche 16 bis 18,
**dadurch gekennzeichnet, daß**
in der zweiten Leitung (9") zur Abgasrückführung ein Absperrelement (11") vorgesehen ist.

**20.** Aufgeladene Brennkraftmaschine (1) nach einem der vorherigen Ansprüche,
**dadurch gekennzeichnet, daß**
die zweite Turbine (7a) eine variable Turbinengeometrie aufweist.

**21.** Aufgeladene Brennkraftmaschine (1) nach einem der Ansprüche 1 bis 19,
**dadurch gekennzeichnet, daß**
die zweite Turbine (7a) eine feste, nicht veränderbare Turbinengeometrie aufweist.

**22.** Aufgeladene Brennkraftmaschine (1) nach einem der Ansprüche 1 bis 21,
**dadurch gekennzeichnet, daß**
die zweite Turbine (7a) als Waste-Gate-Turbine ausgeführt ist.

**23.** Aufgeladene Brennkraftmaschine (1) nach einem der vorherigen Ansprüche,
**dadurch gekennzeichnet, daß**
der der zweiten Turbine (7a) zugeordnete zweite Verdichter (7b) eine variable Verdichtergeometrie aufweist.

**24.** Aufgeladene Brennkraftmaschine (1) nach einem der Ansprüche 1 bis 22,
**dadurch gekennzeichnet, daß**
der der zweiten Turbine (7a) zugeordnete zweite Verdichter (7b) eine feste, nicht veränderbare Verdichtergeometrie aufweist.

**25.** Aufgeladene Brennkraftmaschine (1) nach einem der vorherigen Ansprüche,
**dadurch gekennzeichnet, daß**
der der zweiten Turbine (7a) zugeordnete zweite Verdichter (7b) mit einer zweiten Bypaßleitung (17) ausgestattet ist, die stromabwärts des zweiten Verdichters (7b) aus der zweiten Ansaugleitung (2") abzweigt und vorzugsweise stromaufwärts des zweiten Verdichters (7b) in die zweite Ansaugleitung (2") mündet.

**26.** Aufgeladene Brennkraftmaschine (1) nach einem der vorherigen Ansprüche,
**dadurch gekennzeichnet, daß**
stromabwärts des der ersten Turbine (6a) zugeordneten ersten Verdichters (6b) ein Absperrelement (13) in der ersten Ansaugleitung (2') vorgesehen ist.

**27.** Verfahren zur Beeinflussung der Menge an zurückgeführtem Abgas einer aufgeladenen Brennkraftmaschine (1) nach einem der vorherigen Ansprüche,
**dadurch gekennzeichnet, daß**
die Menge an zurückgeführtem Abgas durch eine Veränderung des Abgasgegendrucks in der ersten Abgasleitung (2') beeinflußt wird.

**28.** Verfahren nach Anspruch 27,
**dadurch gekennzeichnet, daß**
die Menge an zurückgeführtem Abgas durch eine Steigerung des Abgasgegendrucks in der ersten Abgasleitung (2') erhöht wird.

**29.** Verfahren nach Anspruch 28 zur Steuerung der Menge an zurückgeführtem Abgas einer aufgeladenen Brennkraftmaschine (1) nach Anspruch 2 oder 3,
**dadurch gekennzeichnet, daß**
der Abgasgegendruck in der ersten Abgasleitung (2') durch Verstellen des Absperrelementes (14) in Richtung Schließstellung gesteigert wird.

**30.** Verfahren nach Anspruch 28 zur Steuerung der Menge an zurückgeführtem Abgas einer aufgeladenen Brennkraftmaschine (1) nach Anspruch 4 oder 5,
**dadurch gekennzeichnet, daß**
der Abgasgegendruck in der ersten Abgasleitung (2') durch Verstellen der variablen Turbinengeometrie der ersten Turbine (6a) in Richtung Schließstellung d. h. in Richtung kleinerer Turbinenquerschnitte gesteigert wird.

**31.** Verfahren nach Anspruch 27,
**dadurch gekennzeichnet, daß**
die Menge an zurückgeführtem Abgas durch eine Reduzierung des Abgasgegendrucks in der ersten Abgasleitung (2') gesenkt wird.

**32.** Verfahren nach Anspruch 31 zur Steuerung der Menge an zurückgeführtem Abgas einer aufgeladenen Brennkraftmaschine (1) nach Anspruch 2 oder 3,
**dadurch gekennzeichnet, daß**
der Abgasgegendruck in der ersten Abgasleitung (2') durch Verstellen des Absperrelementes (14) in Richtung Offenstellung reduziert wird.

**33.** Verfahren nach Anspruch 31 zur Steuerung der Menge an zurückgeführtem Abgas einer aufgeladenen Brennkraftmaschine (1) nach Anspruch 4 oder 5,
**dadurch gekennzeichnet, daß**
der Abgasgegendruck in der ersten Abgasleitung (2') durch Verstellen der variablen Turbinengeometrie der ersten Turbine (6a) in Richtung Offenstellung d. h. in Richtung größerer Turbinenquerschnitte reduziert wird.

**34.** Verfahren nach einem der Ansprüche 27 bis 33 zur Steuerung der Menge an zurückgeführtem Abgas einer aufgeladenen Brennkraftmaschine (1) nach Anspruch 15,
**dadurch gekennzeichnet, daß**
zur Erzielung hoher Abgasrückführraten sowohl die erste als auch die zweite Leitung (9',9") verwendet wird.

**Geänderte Patentansprüche gemäss Regel 86(2) EPÜ.**

**1.** Aufgeladene Brennkraftmaschine (1) mit mindestens zwei Zylindern (3), die in der Art konfiguriert sind, daß sie zwei Gruppen (3',3") mit jeweils mindestens einem Zylinder (3) bilden und beide Zylindergruppen (3',3") jeweils mit einer separaten Abgasleitung (4',4") ausgestattet sind, und mit zwei parallel geschalteten Abgasturboladern (6,7), wobei eine erste Turbine (6a) eines ersten Abgasturboladers (6) in der Abgasleitung (4') der ersten Zylindergruppe (3') angeordnet ist und eine zweite Turbine (7a) eines zweiten Abgasturboladers (7) in der Abgasleitung (4") der zweiten Zylindergruppe (3") angeordnet ist und die diesen Turbinen (6a,7a) zugeordneten Verdichter (6b,7b) in separaten Ansaugleitungen (2', 2") angeordnet sind, die stromabwärts der Verdichter (6b,7b) zu einer Gesamtansaugleitung (2) zusammenlaufen und zur Versorgung der Brennkraftmaschine (1) mit Frischluft bzw. Frischgemisch dienen, **dadurch gekennzeichnet, daß**

■ die separaten Abgasleitungen (4',4") nicht miteinander in Verbindung stehen,
■ eine erste Leitung (9') zur Abgasrückführung vorgesehen ist, die stromaufwärts der ersten Turbine (6a) aus der dieser ersten Turbine (6a) zugeordneten ersten Abgasleitung (4') abzweigt und in die Gesamtansaugleitung (2) mündet, und Mittel (12) vorgesehen sind, mit denen der Abgasgegendruck in dieser ersten Abgasleitung (4') beeinflußbar ist.

Fig.1

Fig.2

EP 1 640 594 A1

Fig.3

EP 1 640 594 A1

Fig.4

EP 1 640 594 A1

Fig.5

EP 1 640 594 A1

Fig.6

Fig.7

Fig.8

**Europäisches Patentamt**

**EUROPÄISCHER RECHERCHENBERICHT**

Nummer der Anmeldung

EP 04 10 4581

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 1 302 646 A (NISSAN MOTOR COMPANY, LIMITED) 16. April 2003 (2003-04-16) | 1-5,10, 12-20, 24,27-32 | F02M25/07 |
| Y | * Absatz [0044] - Absatz [0060]; Abbildung 1 * | 8,9,11, 22,23, 25,26 | |
| Y | US 4 669 442 A (NAKAMURA ET AL) 2. Juni 1987 (1987-06-02) * Spalte 2, Zeile 59 - Spalte 4, Zeile 7; Abbildung 1 * | 8,22 | |
| Y | EP 1 420 159 A (ISUZU MOTORS LIMITED) 19. Mai 2004 (2004-05-19) * Absatz [0024] - Absatz [0038]; Abbildung 1 * | 26 | |
| X | FR 2 832 759 A (RENAULT) 30. Mai 2003 (2003-05-30) * Seite 4, Zeile 20 - Seite 7, Zeile 7; Abbildung 1 * | 1,7,21 | |
| X | US 6 422 222 B1 (ARBEITER ERICH ET AL) 23. Juli 2002 (2002-07-23) * Spalte 3, Zeile 35 - Spalte 5, Zeile 3; Abbildungen 1,2 * | 1 | **RECHERCHIERTE SACHGEBIETE (Int.Cl.7)** F02M |
| Y | US 6 378 307 B1 (FLEDERSBACHER PETER ET AL) 30. April 2002 (2002-04-30) * Abbildung 1 * | 9,23 | |
| Y | US 5 142 866 A (YANAGIHARA ET AL) 1. September 1992 (1992-09-01) * Abbildung 1 * | 11,25 | |

Der vorliegende Recherchenbericht wurde für alle Patentansprüche erstellt

| Recherchenort | Abschlußdatum der Recherche | Prüfer |
|---|---|---|
| München | 18. Februar 2005 | Marsano, F |

**EP 1 640 594 A1**

## ANHANG ZUM EUROPÄISCHEN RECHERCHENBERICHT
### ÜBER DIE EUROPÄISCHE PATENTANMELDUNG NR.

EP 04 10 4581

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-02-2005

| Im Recherchenbericht angeführtes Patentdokument | | Datum der Veröffentlichung | Mitglied(er) der Patentfamilie | | | Datum der Veröffentlichung |
|---|---|---|---|---|---|---|
| EP 1302646 | A | 16-04-2003 | JP | 2003120354 | A | 23-04-2003 |
| | | | EP | 1302646 | A2 | 16-04-2003 |
| | | | US | 2003088357 | A1 | 08-05-2003 |
| US 4669442 | A | 02-06-1987 | JP | 60195955 | U | 27-12-1985 |
| EP 1420159 | A | 19-05-2004 | JP | 2004162674 | A | 10-06-2004 |
| | | | EP | 1420159 | A2 | 19-05-2004 |
| | | | US | 2004093866 | A1 | 20-05-2004 |
| FR 2832759 | A | 30-05-2003 | FR | 2832759 | A1 | 30-05-2003 |
| | | | EP | 1316698 | A1 | 04-06-2003 |
| US 6422222 | B1 | 23-07-2002 | DE | 19835978 | C1 | 25-11-1999 |
| | | | WO | 0008319 | A1 | 17-02-2000 |
| | | | EP | 1021646 | A1 | 26-07-2000 |
| | | | JP | 2002522687 | T | 23-07-2002 |
| US 6378307 | B1 | 30-04-2002 | DE | 19955508 | C1 | 26-04-2001 |
| | | | FR | 2801931 | A1 | 08-06-2001 |
| | | | IT | RM20000585 | A1 | 18-05-2001 |
| US 5142866 | A | 01-09-1992 | JP | 4050433 | A | 19-02-1992 |
| | | | DE | 4120055 | A1 | 09-01-1992 |

EPO FORM P0461

Für nähere Einzelheiten zu diesem Anhang : siehe Amtsblatt des Europäischen Patentamts, Nr.12/82